# FASCICULE DE BREVET EUROPEEN

(11) **EP 1 066 450 B1**
(45) Date de publication et mention de la délivrance du brevet: **15.05.2002**
(21) Numéro de dépôt: 99909043.4
(22) Date de dépôt: 19.03.1999
(51) Int. Cl.: E21B 17/08, E21B 17/042, E21B 17/00, F16L 15/04, F16L 58/18

(54) **ASSEMBLAGE FILETE DE TUBES METALLIQUES DESTINES A CONTENIR UN FLUIDE CORROSIF**
METALLROHRSCHRAUBVERBINDUNG ZUR ENTHALTUNG EINER KORRODIERENDEN FLÜSSIGKEIT
THREADED ASSEMBLY OF METAL TUBES DESIGNED TO CONTAIN A CORROSIVE FLUID

(30) Priorité: 26.03.1998 FR 9803740
(43) Date de publication de la demande: 10.01.2001
(73) Titulaire: VALLOUREC MANNESMANN OIL & GAS FRANCE, 59620 Aulnoye-Aymeries (FR)
(72) Inventeur: DUTILLEUL, Pierre, F-59144 Jenlain (FR); NOEL, Thierry, F-59990 Sebourg (FR)
(74) Mandataire: Desolneux, Jean-Paul Charles
(86) Numéro de dépôt international: FR9900633
(87) Numéro de publication internationale: WO9949171

(56) Documents cités:
- EP-A- 0 212 288
- EP-A- 0 759 497
- DE-B- 1 068 068
- DE-B- 1 234 162
- FR-A- 1 486 508
- FR-A- 1 489 013
- FR-A- 2 286 332
- GB-A- 2 117 469
- US-A- 3 100 656
- US-A- 3 482 007
- US-A- 4 161 319
- US-A- 4 679 831
- US-A- 5 282 652
- US-A- 5 470 111
- US-A- 5 689 871

## Description

La présente invention concerne un assemblage fileté entre deux tubes métalliques munis ou non d'un revêtement intérieur et plus particulièrement destinés à contenir un fluide corrosif.

On connaît déjà des assemblages filetés de tubes métalliques utilisés notamment dans les puits de pétrole ou de gaz comme tubes de production pour faire remonter en surface le pétrole ou le gaz ou comme tubes de cuvelage pour maintenir les terres autour du puits.

Ces assemblages filetés sont généralement de deux types :
a) intégral, à savoir que l'extrémité du premier tube comporte un élément mâle d'assemblage et l'extrémité du second tube à assembler comporte un élément femelle d'assemblage ;
b) manchonné, à savoir que les extrémités à assembler des tubes comportent chacune un élément mâle d'assemblage, chaque extrémité étant vissée sur un court manchon comportant à chaque extrémité un élément femelle d'assemblage.

Le brevet FR 1.489.013 décrit ainsi un assemblage fileté intégral à filets trapézoïdaux, l'extrémité de l'élément mâle ayant une forme conique concave qui, en fin d'assemblage, vient prendre appui contre une butée conique convexe située à la base du filetage de l'élément femelle ; en outre, l'arête terminale externe de l'élément mâle est légèrement chanfreinée et vient se mater contre une partie tronconique concave correspondante sur l'élément femelle en assurant ainsi une excellente étanchéité aux gaz, même après plusieurs utilisations successives des éléments de l'assemblage.

Ce brevet décrit également en option un assemblage de tubes revêtus intérieurement d'une couche d'émail ou de résine époxy dans le cas où le fluide circulant dans les tubes est un fluide agressif ou corrosif vis-à-vis du métal des tubes.

On peut notamment être amené à utiliser des tubes revêtus intérieurement lorsque le fluide circulant dans les tubes comprend de l'eau avec des chlorures et/ou de l'oxygène dissous ou du CO₂ et est de ce fait très corrosif vis-à-vis du métal utilisé.

Le brevet FR 1.489.013 prévoit pour empêcher toute infiltration de fluide agressif au niveau de la butée de réaliser sur l'intérieur de l'extrémité mâle un logement pour un anneau d'étanchéité complémentaire portant à la fois sur des zones revêtues de l'extrémité mâle et de la butée en continuité avec le revêtement intérieur des tubes.

La demande de brevet EP 759497 décrit un assemblage fileté plus spécialement destiné aux puits d'injection d'eau permettant d'améliorer le taux de récupération des hydrocarbures d'un champ pétrolifère, l'eau injectée dans de tels puits étant en fait souvent une saumure oxygénée qui est extrêmement corrosive.

Le document EP 759497 décrit notamment un assemblage fileté manchonné, le manchon comportant intérieurement de part et d'autre d'une partie centrale en relief, un épaulement annulaire suivi d'un filetage femelle, les tubes comportant extérieurement en allant vers leur extrémité un filetage puis une surface annulaire transversale d'appui complémentaire à l'épaulement du manchon et enfin une zone lisse terminée par une surface annulaire radiale.

Un anneau d'étanchéité en matière synthétique molle est interposé entre les extrémités des tubes et est comprimé par les extrémités de tube dont la position en fin d'assemblage est déterminée par la mise en appui des surfaces d'appui des tubes avec celles correspondantes du manchon. La surface intérieure et les surfaces annulaires d'extrémité des tubes sont revêtues de résine synthétique de sorte que l'infiltration de liquide corrosif dans les parties métalliques de l'assemblage est empêchée par l'anneau ainsi mis en compression.

Ce document EP 759497 décrit également des solutions pour les assemblages filetés intégraux directement dérivées de la solution décrite pour l'assemblage manchonné, la surface d'appui étant dans ce cas reportée à l'extrémité libre de l'élément femelle.

Un tel assemblage avec anneau d'étanchéité en matière synthétique molle ne peut être totalement étanche, notamment aux gaz, la pression de contact assurée par l'anneau en matière molle étant bien moindre que celle résultant d'une déformation élastique métal sur métal telle que décrite dans le brevet FR 1.489.013.

On a cherche par la présente invention à réaliser un assemblage fileté extrêmement sûr et étanche pour tubes métalliques plus particulièrement destinés à contenir un fluide corrosif.

On a cherché à conserver sur l'assemblage fileté de hautes qualités d'étanchéité et de résistance aux sollicitations mécaniques malgré plusieurs cycles de vissage-dévissage, les tubes métalliques devant pouvoir être démontés puis remontés à d'autres plusieurs fois.

On a aussi cherché à réaliser l'assemblage fileté aussi bien sous forme d'assemblage intégral que d'assemblage manchonné et dans ce cas en utilisant des manchons relativement économiques à fabriquer.

On a en outre cherché à réaliser l'assemblage fileté aussi bien :
- entre deux tubes en métal résistant à la corrosion par le fluide contenu,
- qu'entre deux tubes en métal non résistant à la corrosion mais munis d'un revêtement intérieur inerte vis-à-vis du fluide corrosif,
- ou encore entre un tube en métal résistant à la corrosion et un tube muni d'un revêtement intérieur.

Il est bien évident que l'utilisation d'un revêtement intérieur permet d'utiliser un métal moins noble donc moins cher.

Dans le cas de l'utilisation de tubes revêtus intérieurement, on a cherché à réaliser un assemblage compatible aussi bien avec des revêtements minces de quelques centièmes de mm d'épaisseur qu'avec des revêtements sous forme de tubes d'épaisseur de l'ordre de quelques mm doublant intérieurement les tubes principaux et solidarisés à ceux-ci, les matériaux constitutifs de ces tubes de doublage intérieur pouvant être relativement fragiles.

L'invention a en premier lieu pour objet un assemblage fileté intégral entre deux tubes métalliques plus particulièrement destinés à contenir un fluide corrosif, du genre comprenant un élément mâle réalisé extérieurement en extrémité du premier tube assemblé à un élément femelle réalisé intérieurement à l'extrémité du second tube.

L'élément mâle comprend une partie filetée mâle et une partie non filetée mâle, cette dernière étant disposée du côté de l'extrémité libre de l'élément mâle.

L'élément femelle comprend une partie filetée femelle et une partie non filetée femelle du côté opposé à l'extrémité libre de l'élément femelle.

Les parties filetées mâle ou femelle peuvent, par exemple être un filetage conique ou un ensemble de deux filetages cylindriques bi-étagés de manière connue en soi. La partie filetée mâle de l'élément mâle est vissée dans la partie filetée femelle de l'élément femelle et la partie non filetée de l'élément mâle coopère avec celle de l'élément femelle.

La partie non filetée mâle de l'élément mâle comprend en allant vers l'extrémité libre dudit élément :
- une surface d'appui annulaire transversale réalisée sur une fraction de l'épaisseur du tube,
- la surface périphérique extérieure d'un nez de diamètre extérieur réduit,
- une surface annulaire radiale qui rejoint la surface périphérique intérieure du premier tube.

Ladite surface annulaire radiale est appelée dans la suite du présent document surface annulaire d'extrémité intérieure du premier tube.

La partie non filetée femelle de l'élément femelle comprend en allant du côté opposé à l'extrémité libre dudit élément :
- une surface d'appui annulaire transversale formant épaulement complémentaire de la surface d'appui de l'élément mâle,
- la surface périphérique intérieure d'une zone dite de renfort,
- une surface périphérique intérieure de logement pour un anneau d'étanchéité,
- une surface annulaire radiale qui rejoint la surface périphérique intérieure du second tube.

Cette surface annulaire radiale est appelée surface annulaire d'extrémité intérieure du second tube dans la suite du présent document.

La surface d'appui de l'élément mâle est placée en butée contre la surface d'appui de l'élément femelle.

Les surfaces annulaires d'extrémité intérieure des deux tubes sont disposées en regard et à distance l'une de l'autre.

Le qualificatif "radial" pour les surfaces annulaires d'extrémité intérieure des tubes indique dans le présent document que ces surfaces ont une orientation perpendiculaire ou quasi perpendiculaire à l'axe de l'assemblage.

Un anneau d'étanchéité en matériau synthétique est interposé directement ou indirectement entre les surfaces annulaires d'extrémité intérieure des deux tubes et assure un premier moyen d'étanchéité vis-à-vis du fluide contenu intérieurement dans les tubes, l'anneau d'étanchéité étant mis directement ou indirectement en compression axiale par les surfaces annulaires d'extrémité intérieure des deux tubes.

L'anneau d'étanchéité est bien sûr réalisé en matériau inerte vis-à-vis du fluide contenu dans les tubes de l'assemblage.

L'assemblage comprend aussi sur chacune des parties non filetées des éléments mâle et femelle une surface métallique d'étanchéité de forme annulaire située entre partie filetée et surface d'appui, la surface métallique d'étanchéité mâle de l'élément mâle venant porter sur la surface métallique d'étanchéité femelle de l'élément femelle avec une interférence diamétrale positive.

Dans le présent document, on entend par interférence diamétrale entre les points conjugués de deux surfaces de révolution qui interfèrent radialement la différence algébrique de diamètre mesurée avant assemblage entre un point de référence de la surface mâle et le point correspondant en contact de la surface femelle, la valeur de la pression de contact entre les surfaces métalliques d'étanchéité mâle et femelle étant directement fonction de la valeur de l'interférence diamétrale,

On maintient en outre un jeu entre la surface périphérique extérieure du nez de l'élément mâle et la surface périphérique de la zone de renfort en regard sur l'élément femelle.

Ainsi, la présente invention résout le problème de l'obtention d'un assemblage fileté intégral possédant de hautes propriétés d'étanchéité par l'emploi de deux moyens d'étanchéité successifs, disposés convenablement et ayant chacun leur fonction propre : l'anneau d'étanchéité qui est soumis à une pression de contact modérée permet de confiner les phases corrosives du fluide alors que les portées d'étanchéité qui sont soumises à des pressions de contact très élevées procurent à l'assemblage ses caractéristiques globales d'étanchéité.

L'épaisseur relativement élevée des tubes au droit des portées d'étanchéité permet justement de développer de très importantes pressions de contact.

Le jeu maintenu entre surface périphérique extérieure du nez et surface périphérique intérieure de la zone de renfort évite toute décharge de la pression de contact entre les portées d'étanchéité.

L'interposition de surfaces d'appui en butée entre les portées d'étanchéité et l'anneau d'étanchéité diminue encore les risques éventuels de corrosion.

L'invention a aussi pour objet un assemblage fileté manchonné entre deux tubes métalliques plus particulièrement destinés à contenir un fluide corrosif, du genre comprenant un élément mâle réalisé extérieurement en extrémité de chacun des deux tubes et un élément femelle réalisé intérieurement à chaque extrémité d'un manchon, les éléments femelles étant disposés opposés dos à dos sur le manchon.

Chaque élément mâle comprend une partie filetée mâle et une partie non filetée mâle, cette dernière étant disposée du côté de l'extrémité libre de chaque élément mâle considéré.

Chaque élément femelle comprend une partie filetée femelle et une partie non filetée femelle du côté opposé à l'extrémité libre de l'élément femelle considéré.

Les parties filetées mâle ou femelle peuvent, par exemple être un filetage conique ou un ensemble de deux filetages cylindriques bi-étagés de manière connue en soi. La partie filetée mâle de chaque élément mâle est vissée dans la partie filetée femelle de l'élément femelle correspondant et la partie non filetée de chaque élément mâle coopère avec celle de l'élément femelle correspondant.

La partie non filetée mâle de chaque élément mâle comprend en allant vers l'extrémité libre dudit élément :
- une surface d'appui annulaire transversale réalisée sur une fraction de l'épaisseur du tube,
- la surface périphérique extérieure d'un nez de diamètre extérieur réduit,
- une surface annulaire radiale qui rejoint la surface périphérique intérieure du tube considéré.

Lesdites surfaces annulaires radiales sont appelées dans la suite du présent document surfaces annulaires d'extrémité intérieure des deux tubes. Elles sont disposées en regard et à distance l'une de l'autre.

La partie non filetée femelle de chaque élément femelle du manchon comprend en allant du côté opposé à l'extrémité libre dudit élément :
- une surface d'appui annulaire transversale formant épaulement complémentaire de la surface d'appui de l'élément mâle,
- la surface périphérique intérieure d'une zone dite de renfort,
- une surface de logement pour un anneau d'étanchéité commune à la surface de logement sur l'autre élément femelle du manchon.

La surface d'appui de chaque élément mâle est placée en butée contre la surface d'appui de l'élément femelle correspondant.

Un anneau d'étanchéité en matériau synthétique est interposé directement ou indirectement entre les surfaces annulaires d'extrémité intérieure des deux tubes et assure un premier moyen d'étanchéité vis-à-vis du fluide contenu intérieurement dans les tubes, l'anneau d'étanchéité étant mis directement ou indirectement en compression axiale par les surfaces annulaires d'extrémité intérieure des deux tubes.

L'anneau d'étanchéité est bien sûr réalisé en matériau inerte vis-à-vis du fluide contenu dans les tubes de l'assemblage.

L'assemblage comprend aussi sur chacune des parties non filetées de chacun des éléments mâle et femelle une surface métallique d'étanchéité de forme annulaire située entre partie filetée et surface d'appui, la surface métallique d'étanchéité mâle de chaque élément mâle venant porter sur la surface métallique d'étanchéité femelle de l'élément femelle correspondant avec une interférence diamétrale positive.

On maintient en outre un jeu entre la surface périphérique extérieure du nez de chaque élément mâle et la surface périphérique de la zone de renfort en regard sur l'élément femelle correspondant.

La présente invention résout le problème de l'obtention d'un assemblage fileté manchonné possédant de hautes caractéristiques d'étanchéité pour les mêmes raisons que celles exposées dans le cas de l'assemblage fileté intégral.

Le présent document décrit maintenant des solutions préférentielles ou avantageuses qui, sauf indication contraire, peuvent être mises en oeuvre aussi bien sur l'assemblage intégral que sur l'assemblage manchonné selon l'invention.

Préférentiellement, les surfaces annulaires d'extrémité intérieure des tubes possèdent un diamètre extérieur et un diamètre intérieur sensiblement identiques.

Préférentiellement, la surface d'appui de l'élément mâle est une surface conique concave très ouverte, la surface d'appui de l'élément femelle étant conique convexe de même angle au sommet que la surface d'appui mâle. Très préférentiellement, le demi-angle au sommet de ces surfaces d'appui est compris entre 70 et 85°.

Avantageusement, le diamètre de la surface périphérique intérieure de la zone de renfort de l'élément femelle diminue en s'éloignant de la surface d'appui femelle, ce qui tend à renforcer mécaniquement cette dernière.

Dans toute la suite du présent document, on désignera en abrégé par surface de renfort la surface périphérique intérieure de la zone de renfort de l'élément femelle.

Préférentiellement, l'angle entre la surface d'appui et la surface de renfort de celle-ci sur l'élément femelle est un angle droit ou obtus.

Avantageusement, les surfaces métalliques d'étanchéité mâles et femelles sont des surfaces coniques de demi-angle au sommet sensiblement identique dont le diamètre va en diminuant lorsque l'on se rapproche de l'extrémité libre de l'élément mâle.

Préférentiellement, le demi-angle au sommet des surfaces métalliques d'étanchéité mâles et femelles est compris entre 2 et 30°.

Pour éviter que l'anneau d'étanchéité ne se déplace dans son logement, notamment au cours de l'assemblage, la surface périphérique extérieure de l'anneau d'étanchéité porte avantageusement contre au moins une section droite de la surface périphérique du logement ménagé sur l'élément femelle.

Toujours avantageusement, on peut munir l'anneau d'étanchéité de moyens de blocage mécanique pour empêcher un déplacement radial dirigé vers l'axe susceptible de lui faire quitter son logement, ce qui entraînerait le passage de phase corrosive dans l'assemblage. Ces moyens peuvent, par exemple, être des moyens d'encastrement de l'anneau d'étanchéité sur le nez ou la surface d'extrémité des tubes.

On peut aussi donner une forme légèrement conique convexe aux surfaces annulaires d'extrémité des tubes en contact avec l'anneau d'étanchéité de manière à prendre l'anneau d'étanchéité en coin et à l'empêcher de se déplacer radialement vers l'axe.

Préférentiellement, pour limiter le coût des tubes, ceux-ci sont réalisés en métal peu résistant à la corrosion par le fluide contenu et sont munis d'un revêtement sur leur surface périphérique intérieure et sur leur surface annulaire d'extrémité intérieure en veillant à assurer la continuité du revêtement entre ces deux surfaces pour éviter toute infiltration de liquide ou de condensât corrosif entre elles.

L'invention s'applique alors à des tubes composites, composés chacun d'un tube principal en métal peu résistant à la corrosion et du revêtement dont ce tube est muni sur sa surface périphérique intérieure et sur sa surface annulaire d'extrémité intérieure. L'anneau porte dans ce cas indirectement sur les surfaces annulaires d'extrémité intérieure par le revêtement réalisé sur celles-ci.

Le revêtement peut ainsi être une couche de matériau relativement mince tel que par exemple une résine époxy appliquée ou projetée sur la surface périphérique intérieure des tubes de l'assemblage ainsi que sur les surfaces annulaires d'extrémité intérieure de ceux-ci.

Le revêtement peut aussi être de plus forte épaisseur.

Le revêtement de la surface périphérique intérieure des tubes peut notamment être obtenu par un tube en matériau synthétique ou métallique doublant intérieurement le tube principal et solidarisé à celui-ci par des moyens appropriés tels que, par exemple, par cimentation, par collage, par interposition d'une résine adhérente, par soudage, par placage, etc.

Les tubes de doublage intérieur possèdent préférentiellement une surface transversale d'extrémité disposée au droit de la surface annulaire d'extrémité intérieure du tube principal et on vient assurer la continuité du revêtement sur la surface annulaire d'extrémité intérieure des tubes principaux à l'aide d'une bride annulaire solidarisée par une de ses faces à ladite surface annulaire d'extrémité intérieure ainsi qu'à la surface d'extrémité du tube de doublage intérieur tandis que la face opposée de la bride porte sur l'anneau d'étanchéité.

Sur les éléments mâles, la bride constitue alors la partie extrême d'un nez composite et sa surface périphérique extérieure présente un jeu par rapport à la surface périphérique intérieure de la zone de renfort.

L'anneau d'étanchéité porte indirectement sur les surfaces annulaires d'extrémité intérieure des tubes par l'intermédiaire des brides qui sont solidarisées à ces surfaces.

Optionnellement, compte tenu de l'épaisseur de la bride, le nez composite sur le ou les éléments mâles peut être constitué uniquement par la bride, la partie métallique du nez composite ayant une longueur nulle.

Il va de soi que la solidarisation de la bride sur l'extrémité du tube de doublage doit être réalisée de manière à empêcher le passage de phase liquide entre ces deux corps ; la solidarisation peut être réalisée par exemple par collage ou par tout autre moyen équivalent.

Toujours préférentiellement, le tube de doublage intérieur est solidarisé au tube principal par une couche relativement épaisse d'un matériau de liaison adhérent à la fois au tube principal et au tube de doublage intérieur. On entend ici par couche de liaison relativement épaisse, une couche d'épaisseur de l'ordre du mm voire de quelques mm. Une telle couche peut notamment absorber des irrégularités géométriques sur la surface intérieure des tubes telles que résultant d'une conification de l'extrémité du tube principal.

Avantageusement dans ce cas, la face de la bride en regard de la surface annulaire d'extrémité intérieure du tube comporte un moyen d'ancrage en relief coopérant avec un moyen de forme complémentaire dans la surface de bout de la couche de liaison.

La bride peut aussi se prolonger à angle droit du côté de son diamètre intérieur par une manchette solidarisée par sa surface périphérique extérieure à la surface périphérique intérieure du tube de doublage intérieur.

Il va de soi que la solidarisation de la manchette au tube de doublage intérieur doit être réalisée de manière à empêcher le passage de phase liquide entre ces 2 corps ; là encore la solidarisation peut-être réalisée par exemple par collage ou par tout autre moyen équivalent.

Très avantageusement, la bride est réalisée dans le même matériau que le tube de doublage intérieur, ce qui facilite leurjonction et évite que cette jonction soit soumise à des contraintes lors d'un fonctionnement à chaud de l'assemblage.

Par exemple, le matériau du tube de doublage intérieur est du type résine époxy renforcée de fibres de verre.

Avantageusement encore, la surface de la bride annulaire portant sur l'anneau d'étanchéité est une surface très légèrement conique convexe. Il a en effet été observé qu'une telle disposition diminue le risque de fissuration de la bride lorsque celle-ci est réalisée en matériau relativement fragile.

Dans le cas d'un assemblage fileté manchonné qui nécessiterait d'utiliser un anneau d'étanchéité de trop grande largeur axiale qui risquerait notamment de flamber lors de sa mise en compression, on peut remplacer l'anneau d'étanchéité par un corps d'étanchéité équivalent constitué d'un anneau déformable en matériau synthétique disposé coaxialement de part et d'autre d'une bague centrale en matériau relativement dur par rapport à celui des anneaux déformables et non sensible à la corrosion par le fluide contenu intérieurement. Chacun des deux anneaux déformables porte d'un côté sur une surface annulaire d'extrémité intérieure du tube revêtue ou non, de l'autre côte sur une face d'extrémité de la bague centrale.

Avantageusement, les anneaux déformables portent par leur surface périphérique extérieure contre un logement de la périphérie intérieure du manchon.

Les figures suivantes se rapportent à des exemples non limitatifs de modes particuliers de réalisation de l'invention qui seront ensuite décrits dans le détail.

La figure 1 représente une vue générale en coupe longitudinale de deux tubes destinés à constituer un assemblage fileté manchonné selon l'invention.

La figure 2 représente une vue détaillée en coupe de l'assemblage selon l'invention, l'assemblage des tubes de la figure 1 ayant été effectué.

La figure 3 présente un détail de la figure 2 au niveau de l'anneau d'étanchéité.

La figure 4 représente en coupe longitudinale la partie centrale d'un assemblage fileté manchonné selon l'invention, les tubes de l'assemblage étant munis des tubes de doublage intérieur.

La figure 5 représente une variante de l'assemblage fileté de la figure 4.

La figure 6 représente en coupe longitudinale la partie centrale d'un assemblage fileté manchonné selon l'invention de tubes revêtus intérieurement d'une couche de revêtement projeté, l'anneau d'étanchéité étant remplacé par un corps d'étanchéité équivalent.

La figure 7 représente toujours en coupe longitudinale la partie centrale d'un assemblage fileté intégral selon l'invention, le tube correspondant à l'élément mâle étant seul muni d'un tube de doublage intérieur.

La figure 8 représente une autre variante de l'assemblage fileté de la figure 4.

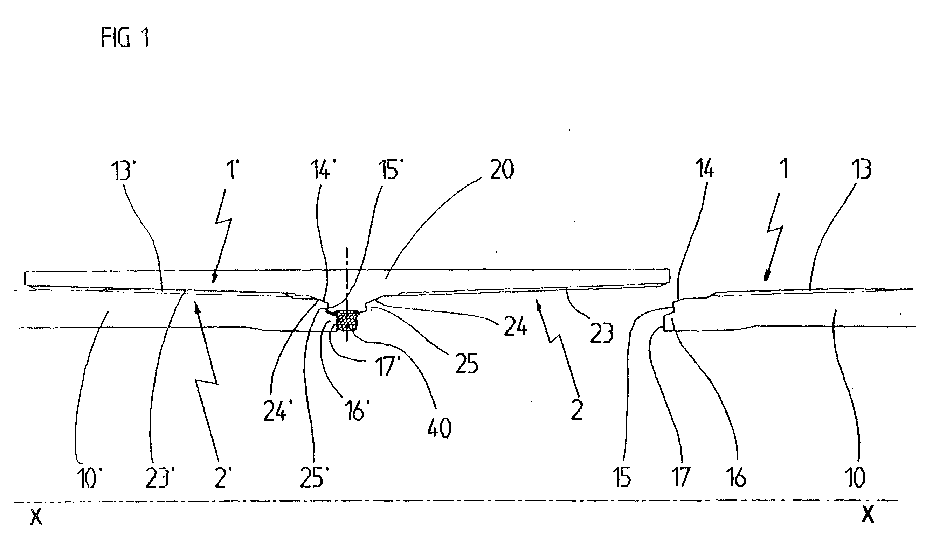

La figure 1 représente deux tubes métalliques 10, 10' destinés à être assemblés par vissage à l'aide d'un manchon 20 qui a été déjà assemblé au tube 10'.

Le tube 10 sera appelé premier tube de l'assemblage et le tube 10' second tube de l'assemblage.

Les tubes 10, 10' présentent extérieurement à leurs extrémités en regard un élément mâle 1, 1', l'élément 1' étant le symétrique de l'élément 1.

Le manchon 20 présente intérieurement à chacune de ses deux extrémités un élément femelle 2, 2', ces éléments femelles étant identiques mais symétriques par rapport au plan médian transversal du manchon.

Compte tenu de la symétrie de l'assemblage, on s'intéressera surtout à l'assemblage du tube 10 au manchon 20 par les éléments coopérants 1, 2, le tube 10' étant, quant à lui, similairement assemblé au manchon 20 par les éléments coopérants 1', 2'.

Les tubes métalliques 10 et 10' sont par exemple des tubes de production ou de cuvelage pour puits de pétrole ou de gaz assemblés en colonne et destinés à contenir et à faire circuler des fluides corrosifs tels que, par exemple, des nydrocarbures contenant du CO₂ humide ou des mélanges d'hydrocarbures, d'eau et de chlorures (saumure).

Ces tubes 10, 10' sont par exemple de ce fait réalisés selon la nature du fluide corrosif en acier inoxydable martensitique, en acier inoxydable austéno-ferritique à 22 % Cr ou en alliage de nickel à 28 % Cr.

L'élément mâle 1 d'assemblage comporte extérieurement en allant vers l'extrémité libre 17 un filetage conique mâle 13 à filets trapézoïdaux suivi d'une partie non filetée comprenant une surface annulaire métallique d'étanchéité 14, une surface d'appui annulaire transversale 15 et se prolongeant au-delà de celle-ci par la surface périphérique extérieure d'un nez 16.

La surface annulaire métallique mâle d'étanchéité 14 est une surface conique dont le diamètre diminue en allant vers l'extrémité libre 17 du tube 10 et dont le demi-angle au sommet est de 20°. On pourrait àussi bien utiliser d'autres valeurs de demi-angle au sommet, aussi petites que 2° et aussi grandes que 30° pour assurer l'étanchéité aux gaz.

La surface d'appui annulaire transversale 15 est une surface conique concave très ouverte de demi-angle au sommet 75 ° qui est usinée sur une fraction seulement de l'épaisseur, la hauteur de cette surface d'appui étant adaptée au couple de vissage de l'assemblage.

Le nez 16 au-delà de la surface d'appui 15 possède une épaisseur relativement faible du fait de la réduction d'épaisseur occasionnée par la surface d'appui transversale.

La surface périphérique extérieure du nez 16 est une surface conique dont le diamètre diminue en allant vers l'extrémité libre 17 et dont le demi-angle au sommet est de 20°.

Le nez 16 se termine par la surface annulaire 17 qui est d'orientation radiale c'est-à-dire perpendiculaire ou sensiblement perpendiculaire à l'axe de l'assemblage XX.

Le tube 10' se termine du côté de sa périphérie intérieure par une surface annulaire radiale 17' en regard de la surface annulaire radiale 17 du tube 10.

Les surfaces annulaires 17 et 17' ont la même épaisseur radialement et sont désignées par le vocable "surface annulaire d'extrémité intérieure des tubes ".

L'élément femelle 2 comprend sur sa surface périphérique intérieure des moyens correspondant aux moyens de l'élément mâle et susceptibles de coopérer avec ceux-ci.

L'élément femelle 2 comprend depuis l'extrémité libre du manchon 20 :
- un filetage femelle 23 du même type que celui de l'élément mâle et avec des filets complémentaires,
- une surface conique 24 d'étanchéité dont la conicité correspond en valeur et en direction à celle de l'élément mâle,
- une surface d'appui 25 conique convexe dont la hauteur, la conicité et la direction correspondent à celle 15 de l'élément mâle,
- une surface conique de renfort 26 dont le diamètre diminue en s'éloignant de la surface d'appui et dont le demi-angle au sommet est de 20°, comme la surface pénpherique exterieure du nez 16,
- et enfin, un logement (21, 22, 22') pour un anneau d'étanchéité 40 disposé en léger creux sur la périphérie intérieure du manchon 20 et sensiblement au milieu de celui-ci.

On notera que la surface conique femelle de renfort 26 forme un angle de 95° par rapport à la surface conique 25 de butée. Il est apparu de manière surprenante qu'une telle configuration permettait de faire passer un couple important de vissage dans les surfaces d'appui 15, 25 malgré la hauteur relativement faible de celles-ci.

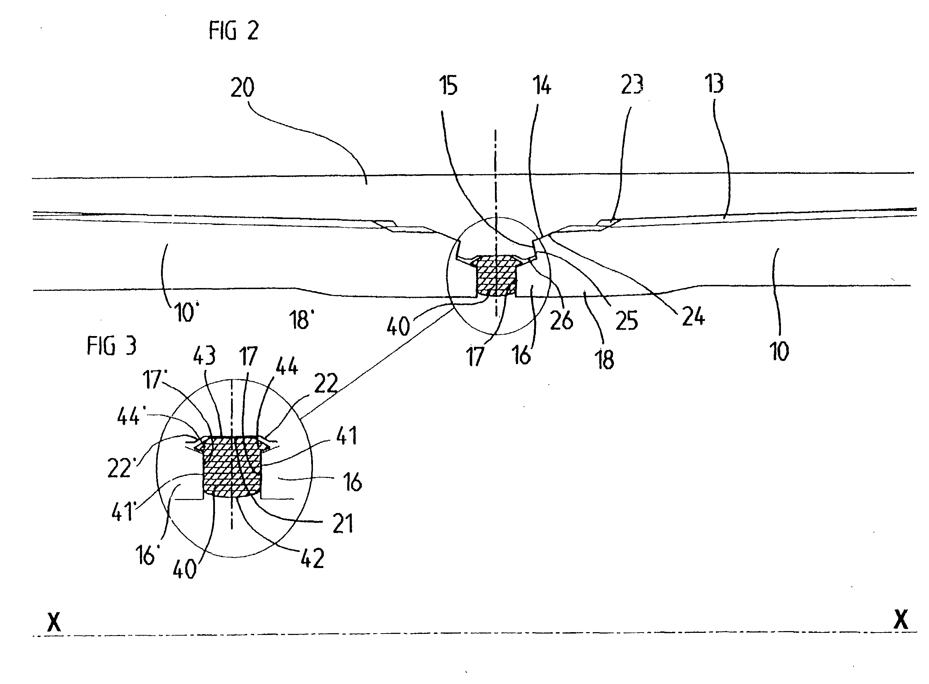

L'anneau d'étanchéité 40, représenté plus en détail à la figure 3, est réalisé en matériau synthétique déformable et inerte vis-à-vis du fluide contenu.

Il comprend deux faces d'extrémité 41, 41' terminées extérieurement par un rebord 44, 44', une surface périphérique intérieure 42 et une surface périphérique extérieure 43.

La surface périphérique extérieure 43 de l'anneau 40 est convexe et constituée d'une surface cylindrique entourée de 2 surfaces coniques lesquelles limitent extérieurement les rebords 44, 44'.

La surface cylindrique centrale vient porter sur la partie cylindrique centrale du logement 21 de manière à éviter tout déplacement radial de l'anneau 40 durant le vissage.

Les surfaces coniques extérieures des rebords 44, 44' de l'anneau 40 présentent par contre un jeu par rapport aux bords également coniques 22, 22' du logement 21. Ce jeu mesuré axialement est de l'ordre du mm et permet, soit d'introduire l'anneau 40 une fois le manchon 20 assemblé sur le tube 10', soit de pouvoir visser le tube 10' sur le manchon 20 dans lequel aura été préalablement introduit l'anneau 40 sans que ledit anneau ne sorte de son logement.

Les faces d'extrémité 41 et 41' de l'anneau 40 sont des surfaces planes sensiblement perpendiculaires à l'axe de l'assemblage.

La face d'extrémité 41' dirigée vers le tube 10' porte axialement directement sur la surface annulaire d'extrémité intérieure 17' du tube 10'.

La face d'extrémité 41 dirigée vers le tube 10 se trouve en regard de la surface annulaire d'extrémité intérieure 17 du tube 10.

Le rôle des rebords 44, 44' sera étudié plus loin sur l'assemblage réalisé.

La surface périphérique intérieure 42 a un diamètre avant assemblage supérieur à celui des extrémités des tubes 10 et 10'. La valeur de cet écart sera indiquée plus loin sur l'assemblage réalisé.

La figure 2 représente les mêmes éléments que la figure 1 une fois l'assemblage réalisé.

A un moment donné, lors du vissage de l'élément mâle 1 dans l'élément femelle 2, la surface annulaire d'extrémité 17 vient en contact avec l'anneau d'étanchéité déformable 40. En poursuivant le vissage, on vient comprimer axialement l'anneau 40 entre les surfaces annulaires d'extrémité intérieure 17 et 17', ce qui empêche l'infiltration ultérieure dans l'assemblage de phase liquide du fluide corrosif contenu intérieurement.

A ce stade du vissage, un tel assemblage ne serait par contre pas parfaitement étanche à des gaz ou à des phases gazeuses sous haute pression.

On poursuit le vissage et on observe d'abord l'accostage des surfaces métalliques d'étanchéité 14 et 24, puis l'établissement d'une pression élastique de contact entre celles-ci et finalement l'accostage de la surface d'appui 15 contre la surface d'appui 25 qui se traduit par la brutale montée du couple de vissage.

La valeur de la pression de contact entre les surfaces métalliques d'étanchéité 14 et 24 est déterminée par la valeur de l'interférence diamétrale obtenue pour une géométrie donnée et notamment pour une conicité des surfaces 14, 24 donnée et pour une épaisseur de métal donnée.

La pression de contact au niveau des surfaces métalliques 14 et 24 ne doit toutefois pas excéder la limite d'élasticité du métal des éléments 1 et 2, un dépassement de cette dernière entraînant un risque de grippage des surfaces métalliques 14 et 24 et une modification des caractéristiques de fonctionnement de l'assemblage après dévissage et revissage ultérieurs.

Pour éviter tout contact entre la surface périphérique extérieure du nez 16 et la surface périphérique intérieure de renfort 26 en regard sur l'élément femelle 2, contact susceptible de réduire la valeur de l'interférence diamétrale entre les surfaces métalliques d'étanchéité 14 et 24, la surface périphérique extérieure du nez 16 est une surface conique d'angle 20° comme la surface conique de renfort 26 en regard sur l'élément femelle 2. En outre, la hauteur d'appui femelle 25 est légèrement plus faible que celle de la surface d'appui mâle 15, ce qui permet de ménager un jeu d'au moins 0,1 mm à tout moment durant et en fin d'assemblage entre la surface périphérique intérieure de renfort 26 de l'élément femelle 2 et la surface périphérique extérieure du nez 16.

La longueur axiale du nez 16 est fonction de la géométrie de l'assemblage, notamment de l'épaisseur axiale de l'anneau d'étanchéité 40 et de la distance entre les surfaces d'appui 25, 25' du manchon 20.

Un nez 16 court se traduit par une zone 26 étroite et peut nécessiter un anneau d'étanchéité 40 relativement large axialement par rapport à son épaisseur radiale. On vise en fait à avoir pour l'anneau d'étanchéité 40 un rapport de ces deux dimensions largeur/épaisseur inférieur ou égal à 1,5 et si possible proche de 1, un rapport largeur/épaisseur élevé risquant de conduire à un flambage de l'anneau 40.

On verra plus loin que, lorsque l'on constitue un nez composite, la partie métallique 16 du nez composite peut optionnellement avoir une longueur nulie.

Un nez 16 trop long se traduit compte tenu de la conicité de sa surface extérieure par une surface annulaire d'extrémité intérieure 17 d'épaisseur insuffisante.

On est d'ailleurs souvent amené à déformer plastiquement l'extrémité des tubes 10, 10', de manière à venir placer en 18, 18' le métal là où il est nécessaire, c'est-à-dire plutôt vers le diamètre intérieur des tubes. Une telle opération dite de conification est bien connue de l'homme du métier.

L'anneau d'étanchéité 40 est réalisé en matériau composite constitué d'une matrice de PTFE renforcée avec 25% de fibres de verre. On peut utiliser un matériau contenant une moindre proportion de fibres de verre mais ceci conduit à diminuer le module d'élasticité du matériau et à devoir déformer davantage l'anneau 40 pour obtenir la même pression de contact.

Pour un renfort à 25% de fibres de verre possédant un module d'élasticité de l'ordre de 800 MPa, on vise à comprimer l'anneau d'étanchéité 40 de 10 à 25% en fin d'assemblage suivant ses dimensions, ce qui permet d'assurer une pression de contact de 80 à 200 MPa environ sur les faces d'extrémité 41, 41' de l'anneau 40.

La surface périphérique intérieure 42 de l'anneau d'étanchéité 40 doit présenter après assemblage un diamètre non sensiblement inférieur à celui des extrémités des tubes 10, 10' faute de quoi l'anneau d'étanchéité serait en saillie intérieure et risquerait d'accrocher des outils déplacés dans les tubes. On calcule donc le diamètre initial de l'anneau 40 à partir du diamètre assemblé en considérant l'égalité du volume comprimé axialement et de celui déformé radialement sur le diamètre, l'anneau 40 étant bloqué extérieurement dans le logement 21.

L'anneau 40 ne permettant pas de réaliser une parfaite étanchéité aux gaz, il règne, compte tenu des surfaces métalliques d'étanchéité 14, 24, 14', 24', en régime stabilisé à la périphérie extérieure de l'anneau 40, une pression de gaz voisine de celle du fluide. Lorsqu'on dépressurise rapidement le fluide, la contre-pression sur la périphérie extérieure 43 de l'anneau 40 devient supéneure à celle du fluide à sa périphérie intérieure 42 et peut obliger l'anneau à quitter son logement et mettre par conséquent une phase liquide corrosive en contact avec le métal de l'assemblage.

Les rebords extérieurs 44, 44' à l'extrémité des surfaces d'extrémité 41, 41' de l'anneau 40 viennent coiffer l'extrémité des nez 16, 16' et réaliser un encastrement de l'anneau déformable par l'extrémité des nez 16 et 16' en empêchant tout déplacement radial intempestif dirigé vers l'axe de l'anneau d'étanchéité 40.

Un autre moyen non représenté pour empêcher le déplacement radial vers l'axe de l'anneau 40 est d'incliner légèrement les surfaces annulaires d'extrémité 17 et 17' pour leur donner la forme de surfaces légèrement coniques convexes de demi-angle au sommet un peu inférieur à 90° de manière à ce que ces surfaces annulaires radiales prennent en coin l'anneau déformable 40 et l'empêchent de se déplacer radialement vers l'axe. On donne alors une forme conique conjuguée aux faces d'extrémité 41, 41' de l'anneau d'étanchéité 40.

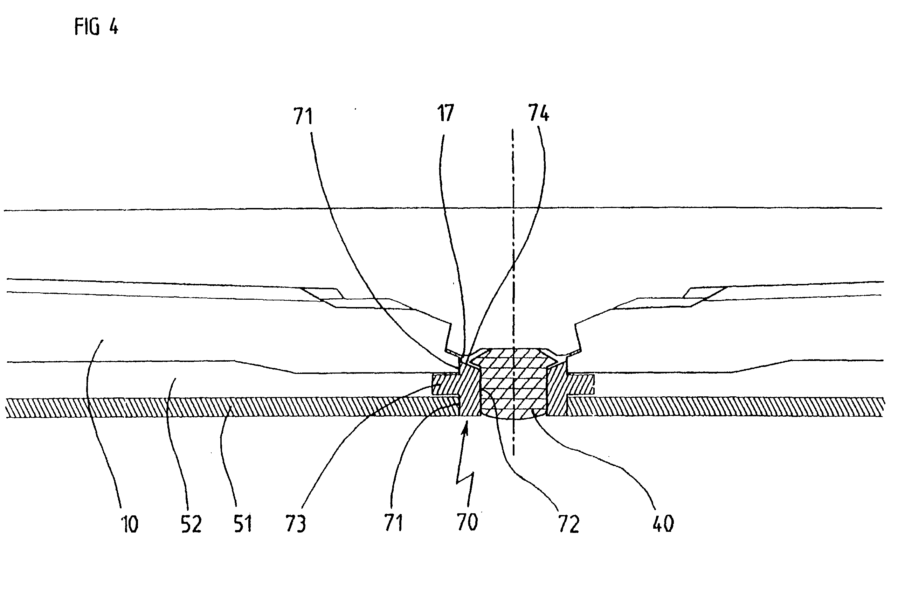

La figure 4 représente un assemblage selon l'invention de tubes métalliques 10 et 10' en acier faiblement allié doublés intérieurement de tubes 51, 51' d'épaisseur de l'ordre de 2 à 3 mm.

Ces tubes de doublage intérieur sont par exemple réalisés en résine époxy renforcée de fibres de verre. Un tel matériau composite est particulièrement adapté lorsque le fluide contenu intérieurement est extrêmement corrosif. On peut citer comme exemple de fluide un mélange chaud à plus de 100°C de gaz naturel, de CO₂ et de saumure (= H₂O + chlorures) contenant en outre des particules abrasives de sable, la pression du fluide étant supérieure à 10 MPa.

La résine époxy chargée en fibres de verre est un matériau qui est en outre résistant aux chocs d'outils susceptibles d'être déplacés dans les tubes mais c'est un matériau qui ne peut être mis en forme par déformation plastique.

Pour assurer la solidarisation du tube de doublage intérieur 51 au tube principal 10, on utilise un ciment ou une résine synthétique sous forme d'une couche de liaison 52 relativement épaisse qui est adhérente à la fois au tube principal 10 et au tube de doublage intérieur 51. Le brevet US 3,482,007 décrit un exemple d'un tel procédé de solidarisation par cimentation.

Il est à noter qu'une couche de liaison 52 suffisamment épaisse permet d'absorber la discontinuité géométrique 18 résultant de la conification de l'extrémité du tube principal 10.

Le tube de doublage intérieur 51 est préférablement coupé au droit de la surface annulaire d'extrémité intérieure 17 du tube 10 ; la présence d'un nez 16 de longueur suffisante pour que la surface de coupe se situe au-delà du sommet de la surface d'appui peut faciliter l'opération de coupe.

Pour assurer la continuité du revêtement sur les surfaces annulaires d'extrémité intérieure 17, 17', on vient emboîter et solidariser une bride annulaire 70, 70' en extrémité des tubes doublés 10+51, 10'+51'.

Chaque bride 70, 70' constitue alors avec le nez métallique 16, 16' la partie extrême d'un nez composite et l'anneau d'étanchéité 40 porte indirectement sur les surfaces annulaires d'extrémité intérieure 17, 17' des tubes par l'intermédiaire des brides 70, 70 qui sont solidarisées à ces surfaces.

Les deux brides 70, 70' étant identiques et montées symétriquement, on ne décrira que la bride 70.

Celle-ci présente une forme annulaire disposée radialement par rapport à l'axe de l'assemblage.

Elle possède une face 71 collée contre la surface annulaire d'extrémité intérieure 17 et contre la surface d'extrémité du tube de doublage intérieur 51, la colle empêchant l'infiltration de phase liquide entre le tube de doublage intérieur 51 et le tube principal 10.

La face 71 comporte un relief annulaire 73 qui est encastré dans une rainure de forme complémentaire réalisée en bout de la couche de liaison 52.

La combinaison de ce relief 73 et de cette rainure permet d'ancrer la bride sur la surface d'extrémité du tube doublé.

L'autre face 72 de la bride 70 porte sur l'anneau d'étanchéité 40.

La bride 70 est réalisée comme le tube de doublage intérieur en résine époxy renforcée de fibres de verre. Un tel matériau est plus dur que le matériau de l'anneau d'étanchéité 40, ce qui permet de bien transmettre la pression de contact donnée par le nez 16.

La surface périphériaue intérieure de la bride 70 est une surface cylindrique située dans le prolongement de la surface périphérique intérieure du tube de doublage intérieur 51. Une telle disposition assure une section de passage constante tout au long de la colonne de tubes.

La surface périphérique extérieure 74 de la bride 70 est une surface conique située sensiblement dans le prolongement de la surface périphérique extérieure du nez 16 de manière à permettre au rebord 44 de l'anneau d'étanchéité 40 de venir se coiffer sur la surface 74.

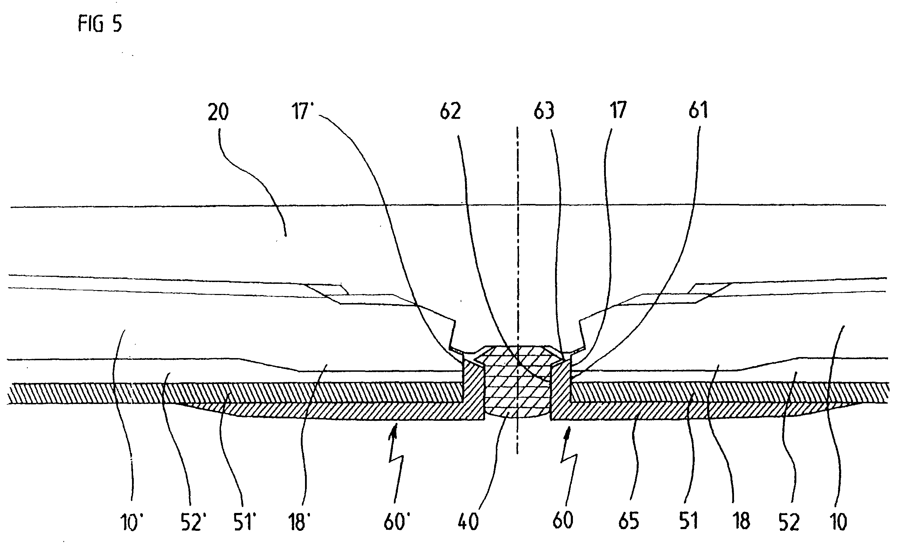

La figure 5 montre une variante de réalisation de la figure 4, la bride 60 ne comportant pas de relief annulaire sur sa face 61 mais étant prolongée à angle droit du côté de son diamètre intérieur par une manchette 65 dont la surface périphérique extérieure est solidarisée par collage à la surface périphérique intérieure du tube de doublage intérieur 51.

Là encore, chaque bride 60, 60' constitue la partie extrême d'un nez composite et l'anneau d'étanchéité 40 porte indirectement sur les surfaces annulaires d'extrémité intérieure 17, 17' des tubes par l'intermédiaire des brides 60, 60' qui sont solidarisées à ces surfaces.

L'épaisseur de la bride 60 et l'épaisseur de la manchette 65 sont suffisantes pour résister aux sollicitations mécaniques.

L'épaisseur de la manchette 65 est toutefois limitée pour ne pas risquer un accrochage ou des coups d'outils susceptibles d'être déplacés dans les tubes en service : une épaisseur de l'ordre de 2 à 3 mm pour la manchette 65 est tout à fait adéquate.

Toujours pour éviter les accrochages et les coups d'outils déplacés dans les tubes en service, la surface périphérique intérieure de la manchette 65 tend à se raccorder avec la surface périphérique intérieure du tube de doublage intérieur 51.

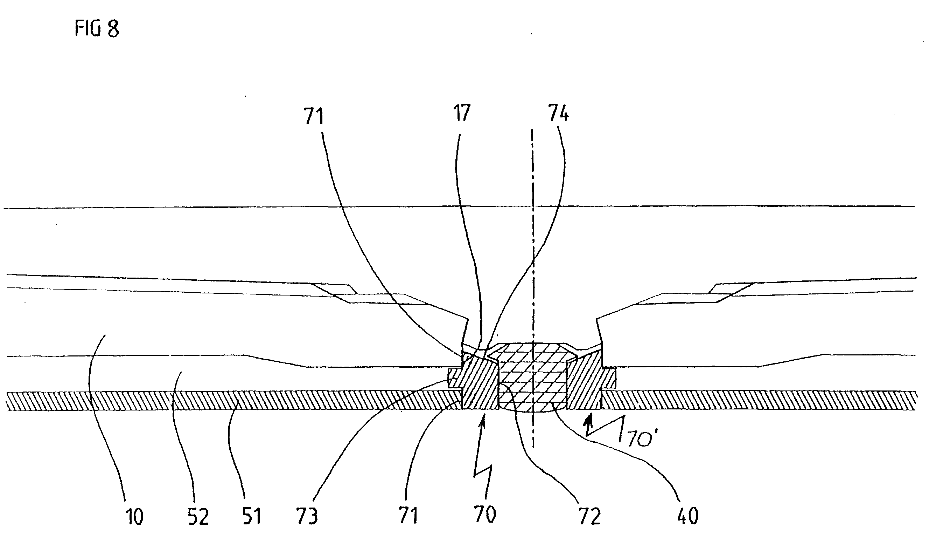

En variante selon la figure 8, le nez composite sur les éléments mâles est constitué uniquement par la bride 70, 70', la partie métallique 16, 16' du nez composite ayant une longueur nulle et la surface annulaire d'extrémité intérieure 17, 17' des tubes étant disposée au droit du pied des surfaces d'appui mâles 15, 15'.

Le jeu existant entre la surface périphérique extérieure des brides annulaires par rapport à la surface périphérique intérieure de la zone de renfort 26, 26' évite toute décharge de la pression de contact entre les portées d'étanchéité 14, 24 et toute désolidarisation des brides 70, 70' par rapport aux tubes principaux.

Il faut en outre noter qu'une forme légèrement conique concave pour la surface 62 ou 72 de portée d'anneau entraîne un surcroît de contrainte sur les parties critiques de la bride 60 ou 70, donc un risque de fissuration de cette dernière. Bien que cela ne soit pas représenté sur les figures 4 ou 5, on pourra avantageusement adopter une forme conique convexe de demi-angle au sommet d'environ 85° pour les surfaces de portée 62 ou 72 de la bride 60 ou 70.

Bien que l'on ne l'ait pas représenté, on peut aussi utiliser un tube de doublage intérieur en métal résistant à la corrosion solidarisé par placage, par co-laminage, par co-extrusion avec le tube principal en acier peu allié. La continuité du revêtement sur les surfaces annulaires d'extrémité intérieure 17 des tubes principaux peut alors être assurée par une bride telle que 60 ou 70 collée.

Le tube de doublage intérieur peut aussi être réalisé en matériau synthétique possédant une ductilité suffisante pour notamment pouvoir rabattre l'extrémité du tube de doublage intérieur à angle droit de manière à constituer une bride revêtant la surface annulaire d'extrémité intérieure du tube sans risque de fissuration des zones déformées. De tels tubes de doublage intérieur hautement déformables peuvent notamment être réalisés en matériau synthétique thermoplastique.

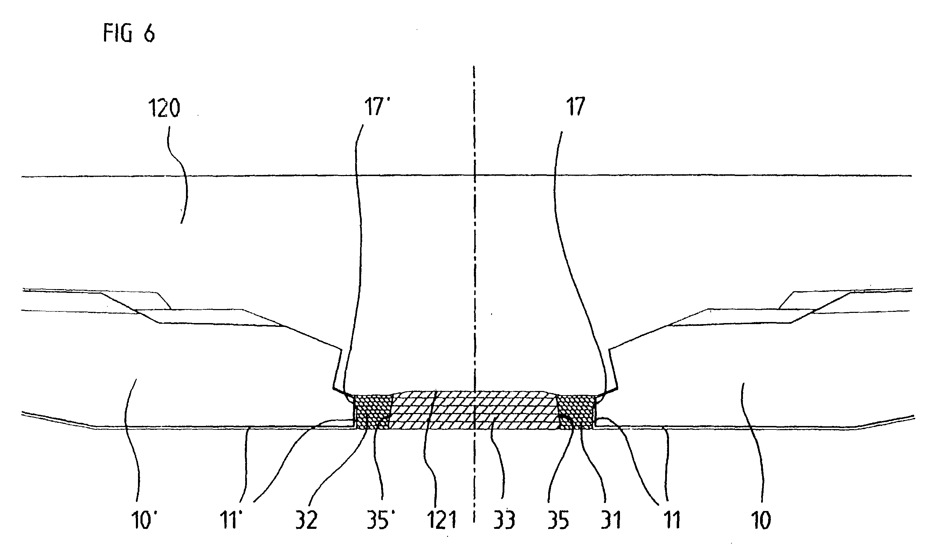

La figure 6 illustre un assemblage fileté manchonné qui nécessiterait un anneau déformable trop large axialement, le revêtement de la surface périphérique intérieure et des surfaces annulaires d'extrémité intérieure 17, 17' des tubes 10, 10' étant une couche mince projetée d'épaisseur d'environ 0,04 mm en matériau synthétique de type époxy.

Dans ce cas, on remplace l'anneau d'étanchéité par un corps d'étanchéité équivalent constitué d'anneaux déformables 31, 32 disposés de part et d'autre d'une bague centrale 33 en matière relativement dure par rapport à celle des anneaux 31, 32 telle qu'une résine époxy chargée de fibres de verre, les anneaux déformables 31, 32 étant eux en PTFE renforcé de 25% de fibres de verre.

Les anneaux déformables 31, 32 peuvent, par exemple, être collés aux surfaces d'extrémité 35, 35' de la bague centrale 33.

La surface périphérique intérieure de la bague centrale 33 se trouve dans le prolongement de la surface périphérique intérieure revêtue des tubes 10 et 10'.

Les surfaces d'extrémités 35, 35' de la bague centrale 33 peuvent être des surfaces légèrement tronconiques convexes de demi-angle au sommet par exemple 80° pour prendre en coin les anneaux déformables 31, 32 et les empêcher de quitter leur logement.

Un tel effet de coin peut être complété en inclinant aussi les surfaces annulaires d'extrémité 17, 17' des tubes 10, 10' en leur donnant une forme légèrement tronconique convexe.

Comme pour les figures précédentes, les anneaux déformables 31, 32 portent par leur périphérie extérieure sur la surface périphérique intérieure du manchon 120 et leur diamètre intérieur est, après assemblage, au moins égal à celui de la surface périphérique intérieure des tubes 10, 10'.

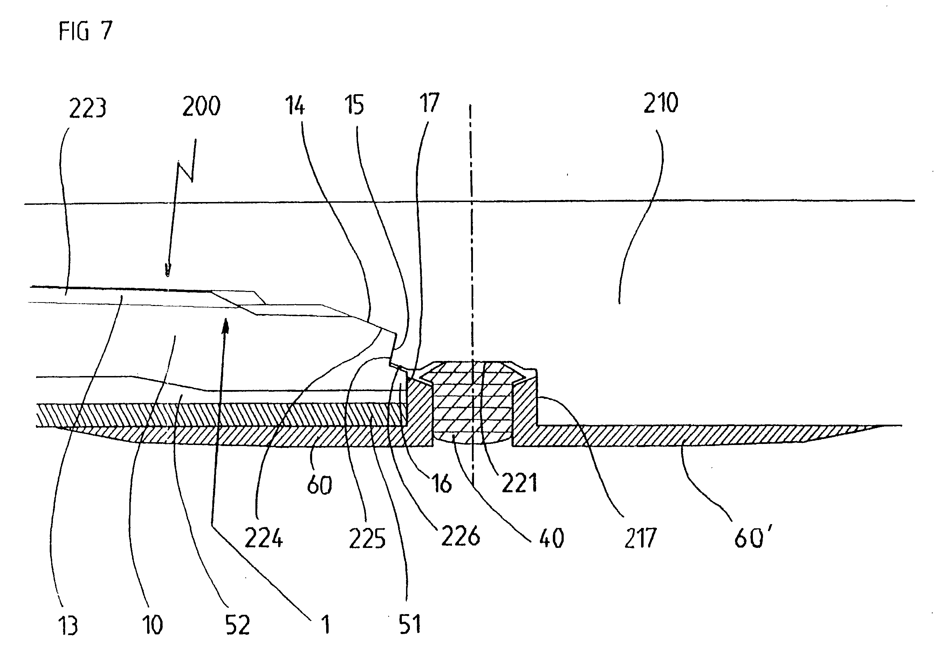

La figure 7 représente un assemblage fileté intégral entre, d'une part un premier tube 10 en acier peu allié doublé intérieurement d'un tube 51 en époxy-fibres de verre et, d'autre part, un accessoire épais 210 en alliage résistant à la corrosion par le fluide contenu tel qu'un acier inoxydable ou un alliage de nickel à durcissement structural.

De tels accessoires épais dans lesquels on peut tailler des joints intégraux se rencontrent notamment en fond de puits pour hydrocarbures.

L'élément fileté mâle 1 est semblable à celui de la figure 5. L'élément fileté femelle 200 est réalisé directement à l'extrémité du tube 210 sur sa périphérie intérieure et comporte les mêmes moyens femelles 221, 223, 224, 225, 226 disposés de la même façon que les moyens femelles 21, 23, 24, 25, 26 de l'élément femelle 2 des figures 1 à 5.

L'élément femelle 200 comprend un filetage 223 du côté extrémité du tube 210 et une partie non filetée laquelle comprend successivement en s'éloignant du filetage 223 une surface métallique d'étanchéité 224, une surface d'appui annulaire transversale 225, une surface conique de renfort 226, un logement 221 pour un anneau d'étanchéité 40 et une surface annulaire radiale 217 dite d'extrémité intérieure.

La surface annulaire d'extrémité intérieure 217 réalisée à l'extrémité de l'élément femelle 200 rejoint la surface périphérique intérieure du corps du tube métallique 210.

Comme dans le cas de la figure 5, la continuité du revêtement intérieur du côté tube 10 est assurée par la bride à manchette 60 collée au tube de doublage intérieur 51 et à la surface annulaire d'extrémité intérieure 17 du tube 10.

Par symétrie, une bride 60' identique à la bride 60 est collée contre la surface périphérique intérieure de l'accessoire tubulaire 210 et contre sa surface annulaire d'extrémité intérieure 217.

On aurait pu aussi se passer de la bride 60', le tube 210 étant alors plus épais pour récupérer l'espace libéré par la bride 60' et sa manchette 65'.

Les surfaces d'extrémité intérieure 17, 217 des tubes principaux 10, 210 sont toujours en regard mais elles possèdent des diamètres intérieurs différents compte tenu de la présence du revêtement 51.

Un anneau d'étanchéité 40 en PTFE chargé de fibres de verre est interposé entre les brides 60, 60' et empêche l'infiltration de phase liquide corrosive dans l'assemblage.

L'anneau d'étanchéité 40 porte indirectement sur les surfaces annulaires d'extrémité intérieure 17, 217 des tubes par l'intermédiaire des brides 60, 60' qui sont solidarisées à ces surfaces.

L'exemple suivant permet de décrire les performances obtenues d'un assemblage fileté manchonné dans une configuration donnée correspondant à la figure 5.
- Colonne de tubes de diamètre extérieur 7" (177,8 mm) et de masse linéaire 29 lb/ft (43,2 Kg/m) correspondant à une épaisseur des tubes métalliques à assembler de 10,36 mm en grade API L80 (acier faiblement allié de limite d'élasticité minimale 551 MPa),
- Filetage conique (conicité sur le diamètre = 1/16) à filets trapézoïdaux (5 filets par pouce),
- Surfaces métalliques d'étanchéité inclinées à 20° sur l'axe,
- Surfaces d'appui coniques de demi-angle au sommet 75° et de hauteur 2,5 mm,
- Nez d'extrémité des tubes de longueur 4 mm incliné extérieurement à 20° par rapport à l'axe,
- Tubes de doublage intérieur d'épaisseur 2,5 mm en composite résine époxy-fibres de verre cimentés aux tubes métalliques,
- Bride d'épaisseur 2,5 mm également en composite résine époxy-fibres de verre avec manchette de même épaisseur 2,5 mm,
- Anneau en PTFE chargé de 25% de fibres de verre, de largeur axiale initiale 9,5 mm et d'épaisseur radiale initiale 7,6 mm, déformé de 15% après assemblage,
- Le couple de vissage appliqué en fin d'assemblage est de 12750 N.m.

Les essais réalisés ont été les suivants :
- vissage-dévissage 5 fois de suite
- tenue en pression interne d'eau selon spécification API 5CT
- tenue en pression interne de gaz (même pression que ci-dessus avec l'eau)
- 1ère combinaison de sollicitation :
   35 MPa de pression interne d'eau
   + 330 MPa en traction (60% de la limite d'élasticité minimale du L80)
   + Flexion avec un angle de flexion de 10°/30 m
   + dépressurisation instantanée
- 2ème combinaison de sollicitation :
   35 MPa de pression interne de gaz à température ambiante et à 100°C
   + 330 MPa en traction (60% de la limite d'élasticité minimale du L80)
   + 3 cycles de flexion alternée avec un angle de flexion de 10°/30m
   + dépressurisation à 1.4 MPa/mn.

Le critère de tenue à ces essais est un essai d'isolation électrique dit " Holiday test " selon spécification NACE TM 0186 entre, d'une part, la surface périphérique intérieure des tubes de doublage intérieur et des manchettes et, d'autre part, les tubes métalliques. Cet essai d'isolation électrique (13 KV, courant continu) permet de détecter toute fissuration des tubes de doublage intérieur, des brides et des manchettes associées à celles-ci durant les essais mécaniques.

L'intégrité de la structure des tubes de doublage intérieur, des brides et des anneaux d'étanchéité a également été contrôlée visuellement après les essais mécaniques. Les résultats à ce contrôle visuel ont tous été satisfaisants.

La présente invention n'est bien entendu pas limitée aux exemples ci-dessus mais couvre toute réalisation tombant dans le domaine protégé, comme défini par les caractéristiques de la revendication 1.

## Revendications

1. Assemblage fileté intégral entre deux tubes métalliques (10, 210) du genre comprenant un élément mâle (1) réalisé extérieurement en extrémité du premier tube (10) et un élément femelle (200) réalisé intérieurement à l'extrémité du second tube (210),
- l'élément mâle (1) comprenant une partie filetée mâle (13) et une partie non filetée mâle, cette dernière étant disposée du côté de l'extrémité libre de l'élément mâle (1),
- l'élément femelle (200) comprenant une partie filetée femelle (223) et une partie non filetée femelle, cette dernière étant disposée du côté opposé à l'extrémité libre de l'élément femelle (200),
- la partie filetée mâle (13) de l'élément mâle étant vissée dans la partie filetée femelle (223) de l'élément femelle et la partie non filetée de l'élément mâle (1) coopérant avec celle de l'élément femelle (200),
- la partie non filetée mâle de l'élément mâle (1) comprenant en allant vers l'extrémité libre dudit élément mâle une surface d'appui annulaire transversale (15) réalisée sur une fraction de l'épaisseur du tube, se prolongeant par la surface périphérique extérieure d'un nez de diamètre extérieur réduit et se terminant par une surface annulaire radiale (17) dite surface annulaire d'extrémité intérieure du premier tube qui rejoint la surface périphérique intérieure dudit premier tube (10),
- la partie non filetée femelle de l'élément femelle (200) comprenant en allant du côté opposé à l'extrémité libre dudit élément femelle une surface d'appui annulaire transversale (225) formant épaulement complémentaire de la surface d'appui (15) de l'élément mâle (1), se prolongeant par la surface périphérique intérieure d'une zone dite de renfort (226), puis par une surface périphérique intérieure de logement (221) pour un anneau d'étanchéité et se terminant par une surface annulaire radiale (217) dite surface annulaire d'extrémité intérieure du second tube qui rejoint la surface périphérique intérieure du second tube (210),
- la surface d'appui (15) de l'élément mâle (1) étant placée en butée contre la surface d'appui (225) de l'élément femelle (200),
- les surfaces annulaires d'extrémité intérieure (17, 217) des deux tubes (10, 210) étant disposées en regard et à distance l'une de l'autre,
- un anneau d'étanchéité (40) en matériau synthétique étant interposé directement ou indirectement entre les surfaces annulaires d'extrémité intérieure (17, 217) des deux tubes (10, 210) et étant mis directement ou indirectement en compression axiale par ces dernières,
**caractérisé en ce que** :
a) l'assemblage comprend sur chacune des parties non filetées des éléments mâle et femelle une surface métallique d'étanchéité de forme annulaire située entre partie filetée et surface d'appui, la surface métallique d'étanchéité mâle (14) de l'élément mâle (1) venant porter sur la surface métallique d'étanchéité femelle (224) de l'élément femelle (200) avec une interférence diamétrale positive,
b) on maintient un jeu entre la surface périphérique extérieure du nez (16) de l'élément mâle (1) et la surface périphérique de la zone de renfort (226) en regard sur l'élément femelle (200).

2. Assemblage fileté manchonné entre deux tubes métalliques (10, 10') du genre comprenant un élément mâle (1, 1') réalisé extérieurement en extrémité de chacun des deux tubes (10, 10'), et un élément femelle (2, 2') réalisé intérieurement à chaque extrémité d'un manchon (20), les éléments femelles (2, 2') étant disposés opposés dos à dos sur le manchon (20),
- chaque élément mâle (1,1') comprenant une partie filetée mâle (13,13') et une partie non filetée mâle, cette dernière étant disposée du côté de l'extrémité libre de chaque élément mâle considéré,
- chaque élément femelle (2, 2') comprenant une partie filetée femelle (23, 23') et une partie non filetée femelle du côté opposé à l'extrémité libre de l'élément femelle considéré,
- la partie filetée mâle (13, 13') de chaque élément mâle (1, 1') étant vissée dans la partie filetée femelle (23, 23') de l'élément femelle correspondant (2, 2') et la partie non filetée de chaque élément mâle coopérant avec celle de l'élément femelle correspondant,
- la partie non filetée mâle de chaque élément mâle (1, 1') comprenant en allant vers l'extrémité libre dudit élément mâle une surface d'appui annulaire transversale (15, 15') réalisée sur une fraction de l'épaisseur du tube, se prolongeant par la surface périphérique extérieure d'un nez de diamètre extérieur réduit et se terminant par une surface annulaire radiale (17, 17') dite surface annulaire d'extrémité intérieure qui rejoint la surface périphérique intérieure du tube considéré (10, 10'),
- lesdites surfaces annulaires d'extrémité intérieure (17, 17') étant disposées en regard et à distance l'une de l'autre,
- la partie non filetée femelle de chaque élément femelle (2, 2') du manchon (20) comprenant en allant du côté opposé à l'extrémité libre dudit élément femelle une surface d'appui annulaire transversale (25, 25') formant épaulement complémentaire de la surface d'appui (15, 15') de l'élément mâle (1, 1') correspondant, se prolongeant par la surface périphérique intérieure d'une zone dite de renfort (26, 26'), puis par une surface de logement (22, 21) pour un anneau d'étanchéité commune à la surface de logement (22', 21) de l'autre élément femelle du manchon (20),
- la surface d'appui (15, 15') de chaque élément mâle (1, 1') étant placée en butée contre la surface d'appui (25, 25') de l'élément femelle correspondant,
- un anneau d'étanchéité (40) en matériau synthétique étant interposé directement ou indirectement entre les surfaces annulaires d'extrémité intérieure (17, 17') des deux tubes (10, 10') et étant mis directement ou indirectement en compression axiale par ces dernières,
**caractérisé en ce que** :
a) l'assemblage comprend sur chacune des parties non filetées de chacun des éléments mâles (1, 1') et femelles (2, 2') une surface métallique d'étanchéité de forme annulaire située entre partie filetée et surface d'appui, la surface métallique d'étanchéité mâle (14, 14') de chaque élément mâle (1, 1') venant porter sur la surface métallique d'étanchéité femelle (24, 24') de l'élément femelle correspondant (2, 2') avec une interférence diamétrale positive.
b) on maintient un jeu entre la surface périphérique extérieure du nez (16, 16') de chaque élément mâle (1, 1') et la surface périphérique de renfort (26, 26') en regard sur l'élément femelle correspondant (2, 2').

3. Assemblage fileté selon la revendication 1 ou 2, **caractérisé en ce que** les surfaces annulaires d'extrémité intérieure (17, 17', 217) des tubes possèdent des diamètres extérieurs et intérieurs sensiblement identiques.

4. Assemblage fileté selon l'une quelconque des revendications 1 à 3, **caractérisé en ce que** la surface d'appui (15) de l'élément mâle est une surface conique concave très ouverte, la surface d'appui (25, 225) de l'élément femelle (2, 200) étant conique mais convexe d'angle correspondant à celui de la surface d'appui (15) de l'élément mâle (1).

5. Assemblage fileté selon l'une quelconque des revendications 1 à 4, **caractérisé en ce que** le diamètre de la surface périphérique intérieure de la zone de renfort (26, 226) sur l'élément femelle (2, 200) diminue en s'éloignant de la surface d'appui (25, 225).

6. Assemblage fileté selon la revendication 5, **caractérisé en ce que** l'angle entre la surface d'appui (25, 225) de l'élément femelle (2, 200) et la surface de renfort (26, 226) de ce même élément est un angle droit ou obtus.

7. Assemblage fileté selon l'une quelconque des revendications 1 à 6 **caractérisé en ce que** les surfaces métalliques d'étanchéité mâle (14) et femelle (24, 224) sont des surfaces coniques de demi-angle au sommet sensiblement identique, le diamètre de ces surfaces diminuant en se rapprochant de l'extrémité libre de l'élément mâle (1).

8. Assemblage fileté selon l'une quelconque des revendications 1 à 7, **caractérisé en ce que** la surface périphérique extérieure (43) de l'anneau d'étanchéité (40) porte contre au moins une section droite de la surface périphérique du logement (21, 221) ménagé sur l'élément femelle (2, 200).

9. Assemblage fileté selon l'une quelconque des revendications 1 à 8 **caractérisé en ce que** l'anneau d'étanchéité (40) comporte des moyens de blocage mécanique (44, 44') empêchant son déplacement radial vers l'axe, déplacement susceptible de lui faire quitter son logement (21, 221).

10. Assemblage fileté selon l'une quelconque des revendications 1 à 9 **caractérisé en ce que** les surfaces annulaires d'extrémité des tubes de l'assemblage en contact avec l'anneau d'étanchéité (40) sont des surfaces légèrement coniques convexes prenant en coin l'anneau d'étanchéité (40) et empêchant celui-ci de se déplacer radialement vers l'axe.

11. Assemblage fileté selon l'une quelconque des revendications 1 à 10, **caractérisé en ce que** l'on munit au moins un des tubes de l'assemblage d'un revêtement sur sa surface périphérique intérieure et sur sa surface annulaire d'extrémité intérieure (17, 17', 217) en veillant à assurer la continuité du revêtement entre ces deux surfaces.

12. Assemblage fileté selon la revendication 11 **caractérisé en ce que** le revêtement utilisé pour la surface périphérique intérieure du tube et la surface annulaire d'extrémité intérieure est une couche (11, 11') de revêtement synthétique projeté ou appliqué.

13. Assemblage fileté selon la revendication 11, **caractérisé en ce que** le revêtement de la surface périphérique intérieure du ou des tubes à assembler est constitué par un tube de doublage intérieur (51) solidarisé au tube correspondant (10) de l'assemblage, dont la surface transversale d'extrémité est disposée au droit de la surface annulaire d'extrémité intérieure (17) dudit tube correspondant (10) de l'assemblage et **en ce qu'**on vient assurer la continuité du revêtement sur ladite surface annulaire d'extrémité intérieure (17) à l'aide d'une bride (60, 70) annulaire dont une des faces (61, 71) est solidarisée à la surface annulaire d'extrémité intérieure (17) du tube (10) et à la surface d'extrémité du tube de doublage intérieur (51) et dont la face opposée (62, 72) porte contre l'anneau d'étanchéité (40), le nez de l'élément mâle étant un nez composite constitué d'une partie métallique (16, 16' ) et de la bride annulaire (60, 70).

14. Assemblage fileté selon la revendication 13 **caractérisé en ce que** le nez composite sur le ou les éléments mâles est constitué exclusivement par la bride annulaire (60, 70), la partie métallique (16, 16') du nez composite ayant une longueur nulle.

15. Assemblage fileté selon la revendication 13 ou 14, **caractérisé en ce que** le tube de doublage intérieur (51) est solidarisé au tube (10) de l'assemblage par une couche (52) relativement épaisse d'un matériau de liaison adhérant au tube principal (10) et au tube de doublage intérieur (51).

16. Assemblage fileté selon l'une quelconque des revendications 13 à 15 **caractérisé en ce que** la face (71) de la bride (70) dirigée vers la surface annulaire d'extrémité intérieure (17) comporte un moyen d'ancrage (73) en relief coopérant avec un moyen de forme complémentaire dans la surface de bout de la couche de liaison (52).

17. Assemblage fileté selon l'une quelconque des revendications 13 à 15 **caractérisé en ce que** la bride (60) se prolonge à angle droit du côté de son diamètre intérieur par une manchette (65) solidarisée par sa surface périphérique extérieure à la surface périphérique intérieure du tube de doublage intérieur (51).

18. Assemblage fileté selon l'une quelconque des revendications 13 à 17 **caractérisé en ce que** les brides (60, 60', 70, 70') sont réalisées dans le même type de matériau que les tubes de doublage intérieur (51, 51').

19. Assemblage fileté selon l'une quelconque des revendications 13 à 18 **caractérisé en ce que** la surface (62 72) de portée d'anneau sur la bride (60, 70) est une surface très légèrement conique convexe.

20. Assemblage fileté manchonné selon la revendication 2 prise seule ou conjointement à l'une quelconque des revendications 3 à 19, **caractérisé en ce que** l'anneau d'étanchéité est un corps d'étanchéité équivalent constitué d'un anneau déformable (31, 32) disposé coaxialement de part et d'autre d'une bague centrale (33) en matériau synthétique dur, chacun des deux anneaux déformables (31, 32) portant axialement d'une part sur une face d'extrémité (35, 35') de la bague centrale (33), d'autre part sur la surface annulaire radiale d'extrémité intérieure (17, 17') des tubes (10, 10').

21. Assemblage fileté manchonné selon la revendication 20 **caractérisé en ce que** les anneaux déformables (31, 32) sont collés aux faces d'extrémité (35, 35') de la bague centrale (33)

22. Assemblage fileté selon la revendication 20 ou 21 **caractérisé en ce que** les faces d'extrémité (35, 35') de la bague centrale (33) sont des surfaces tronconiques convexes de demi-angle au sommet au moins égal à 75°.

## Claims

1. An integral threaded connection between two metal pipes (10, 210) of the type comprising a male element (1) externally formed at the end of a first pipe (10) and a female element (200) internally formed at the end of a second pipe (210);
• the male element (1) comprising a male threaded portion (13) and a male non threaded portion, the latter being located at the free end side of the male element (1);
• the female element (200) comprising a female threaded portion (223) and a female non threaded portion, the latter being disposed on the opposite side to the free end of the female element (200);
• the male threaded portion (13) of the male element being screwed into the female threaded portion (223) of the female element and the non threaded portion of the male element (1) co-operating with that of the female portion (200);
• the male non threaded portion of the male element (1) comprising, on moving towards the free end of said male element, an annular transverse bearing surface (15) formed over a fraction of the pipe thickness, being extended by the external peripheral surface of a nose with a reduced external diameter and terminating in an annular radial surface (17) termed the annular internal end surface of the first pipe which joins the internal peripheral surface of said first pipe (10);
• the female non threaded portion of the female element (200) comprising, moving towards the side opposite the free end of said female element, an annular transverse bearing surface (225) forming a shoulder which is complementary to the bearing surface (15) of the male element (1), being extended by the internal peripheral surface of a zone termed a reinforcing zone (226), then by an internal peripheral surface of a housing (221) for a sealing ring, and terminating in an annular radial surface (217) termed the annular internal end surface of the second pipe, which joins the intemal peripheral surface of the second pipe (210);
• the bearing surface (15) of the male element (1) abutting against the bearing surface (225) of the female element (200);
• the annular internal end surfaces (17, 217) of the two pipes (10, 210) being disposed facing each other at a distance from each other;
• a sealing ring (40) of synthetic material being directly or indirectly interposed between the annular internal end surfaces (17, 217) of the two pipes (10, 210) and being directly or indirectly axially compressed by said annular internal end surfaces;
**characterized in that**:
a) each of the non threaded portions of the male and female elements of the connection comprises a metal sealing surface which is annular in shape located between the threaded portion and the bearing surface, the male metal sealing surface (14) of the male element (1) bearing on the female metal sealing surface (224) of the female element (200) with a positive diametral interference;
b) a clearance is maintained between the external peripheral surface of the nose (16) of the male element (1) and the facing peripheral surface of the reinforcing zone (226) on the female element (200).

2. A threaded and coupled connection between two metal pipes (10, 10') of the type comprising a male element (1,1') externally formed at the end of each of two pipes (10, 10') and a female element (2, 2') internally formed at each end of a coupling (20), the female elements (2, 2') being oppositely disposed back to back on the coupling (20);
• each male element (1, 1') comprising a male threaded portion (13, 13') and a male non threaded portion, the latter being located on the free end side of the male element under consideration;
• each female element (2, 2') comprising a female threaded portion (23, 23') and a female non threaded portion on the opposite side to the free end of the female element under consideration;
• the male threaded portion (13, 13') of each male element (1, 1') being screwed into the female threaded portion (23, 23') of the corresponding female element (2, 2') and the non threaded portion of each male element co-operating with that of the corresponding female portion;
• the male non threaded portion of each male element (1, 1') comprising, on moving towards the free end of said male element, an annular transverse bearing surface (15, 15') formed over a fraction of the pipe thickness, being extended by the external peripheral surface of a nose with a reduced external diameter and terminating in an annular radial surface (17, 17') termed the annular internal end surface which joins the internal peripheral surface of the pipe under consideration (10, 10');
• said annular internal end surfaces (17, 17') being disposed facing each other and at a distance from each other;
• the female non threaded portion of each female element (2, 2') of coupling (20) comprising, on moving towards the side opposite the free end of said female element, an annular transverse bearing surface (25, 25') forming a shoulder which is complementary to the bearing surface (15, 15') of the corresponding male element (1, 1'), being extended by the internal peripheral surface of a zone termed a reinforcing zone (26, 26'), then by a housing surface (22, 21) for a sealing ring which is in common with the housing surface (22', 21) of the other female element of coupling (20);
• the bearing surface (15, 15') of each male element (1, 1') abutting against the bearing surface (25, 25') of the corresponding female element;
• a sealing ring (40) of synthetic material being directly or indirectly interposed between the annular internal end surfaces (17, 17') of the two pipes (10, 10') and being axially compressed by said annular internal end surfaces;
**characterized in that**:
a) each of the non threaded portions of each of the male (1, 1') and female (2, 2') elements of the connection comprises a metal sealing surface which is annular in shape located between the threaded portion and the bearing surface, the male metal sealing surface (14, 14') of each male element (1, 1') bearing on the female metal sealing surface (24, 24') of the corresponding female element (2, 2') with a positive diametral interference;
b) a clearance is maintained between the external peripheral surface of the nose (16, 16') of each male element (1, 1') and the facing peripheral reinforcing surface (26, 26') on the corresponding female element (2, 2').

3. A threaded connection according to claim 1 or claim 2, **characterized in that** the annular internal end surfaces (17, 17', 217) of the pipes have substantially identical external and internal diameters.

4. A threaded connection according to any one of claims 1 to 3, **characterized in that** the bearing surface (15) of the male element is a very open concave conical surface, the bearing surface (25, 225) of the female element (2, 200) being conical but convex at an angle corresponding to that of the bearing surface (15) of the male element (1).

5. A threaded connection according to any one of claims 1 to 4, **characterized in that** the diameter of the internal peripheral surface of the reinforcing zone (26, 226) on the female element (2, 200) reduces as the distance increases from the bearing surface (25, 225).

6. A threaded connection according to claim 5, **characterized in that** the angle between the bearing surface (25, 225) of the female element (2, 200) and the reinforcing surface (26, 226) of the same element is a right or an obtuse angle.

7. A threaded connection according to any one of claims 1 to 6, **characterized in that** the male (14) and female (24, 224) metal sealing surfaces are conical surfaces with a vertex half-angle which is substantially identical, the diameter of these surfaces reducing towards the free end of the male element (1).

8. A threaded connection according to any one of claims 1 to 7, **characterized in that** the external peripheral surface (43) of the sealing ring (40) bears against at least one straight section of the peripheral surface of the housing (21, 221) provided on the female element (2, 200).

9. A threaded connection according to any one of claims 1 to 8, **characterized in that** the sealing ring (40) comprises mechanical blocking means (44, 44') to prevent radial displacement of the ring towards the axis, which displacement could cause the ring to leave its housing (21, 221).

10. A threaded connection according to any one of claims 1 to 9, **characterized in that** the end annular surfaces of the pipes of the connection in contact with the sealing ring (40) are slightly conical convex surfaces which wedge the sealing ring (40) and prevent it from displacing radially towards the axis.

11. A threaded connection according to any one of claims 1 to 10, **characterized in that** the internal peripheral surface and annular internal end surface (17, 17', 217) of at least one of the pipes of the connection is provided with a coating, care being taken to ensure that the coating is continuous between these two surfaces.

12. A threaded connection according to claim 11, **characterized in that** the coating used for the internal peripheral surface of the pipe and the annular internal end surface is a layer (11, 11') of a synthetic coating which is sprayed or applied.

13. A threaded connection according to claim 11, **characterized in that** the coating on the internal peripheral surface of the pipe or pipes to be connected is constituted by an internal lining tube (51) which is affixed to the corresponding pipe (10) of the connection, the transverse end surface of which is disposed in the same cross-section as the annular internal end surface (17) of said corresponding pipe (10) of the connection and **in that** the continuity of the coating on said annular internal end surface (17) is ensured by means of an annular flange (60, 70), one of the faces (61, 71) of which is affixed to the annular internal end surface (17) of pipe (10) and to the end surface of the internal lining tube (51) and the opposite face (62, 72) of which bears against the sealing ring (40), the nose of the male element being a compound nose constituted by a metallic portion (16, 16') and the annular flange (60, 70).

14. A threaded connection according to claim 13, **characterized in that** the compound nose on the male element or elements is exclusively constituted by the annular flange (60, 70), the metallic portion (16, 16') of the compound nose having a zero length.

15. A threaded connection according to claim 13 or claim 14, **characterized in that** the internal lining tube (51) is affixed to the pipe (10) of the connection by a relatively thick layer (52) of a bonding material which adheres to the main pipe (10) and to the internal lining tube (51).

16. A threaded connection according to any one of claims 13 to 15, **characterized in that** the face (71) of the flange (70) directed towards the annular internal end surface (17) comprises a protruding anchoring means (73) co-operating with a means of complementary shape in the end surface of the bonding layer (52).

17. A threaded connection according to any one of claims 13 to 15, **characterized in that** the flange (60) is extended at a right angle on the side of its internal diameter by a collar (65) affixed via its external peripheral surface to the internal peripheral surface of the internal lining tube (51).

18. A threaded connection according to any one of claims 13 to 17, **characterized in that** the flanges (60, 60', 70, 70') are formed from the same type of material as the internal lining tubes (51, 51').

19. A threaded connection according to any one of claims 13 to 18, **characterized in that** the bearing surface (62, 72) for the ring on the flange (60, 70) is a very slightly convex conical surface.

20. A threaded and coupled connection according to claim 2, taken alone or in combination with any one of claims 3 to 19, **characterized in that** the sealing ring is an equivalent sealing means constituted by a deformable ring (31, 32) disposed coaxially either side of a central ring (33) of hard synthetic material, each of the two deformable rings (31, 32) bearing axially on one end face (35, 35') of the central ring (33), and on the annular radial surface of the internal end (17, 17') of pipes (10, 10').

21. A threaded and coupled connection according to claim 20, **characterized in that** the deformable rings (31, 32) are adhered to the end faces (35, 35') of the central ring (33).

22. A threaded connection according to claim 20 or claim 21, **characterized in that** the end faces (35, 35') of the central ring (33) are convex frustoconical surfaces with a vertex half-angle of at least 75°.

## Patentansprüche

1. Integrale Gewindeverbindung zwischen zwei Metallrohren (10, 210) von der Art mit einem Einsteckelement (1), das außen am Ende des ersten Rohrs (10) ausgebildet ist, und einem Aufnahmeelement (200), das innen am Ende des zweiten Rohrs (210) ausgebildet ist,
- wobei das Einsteckelement (1) einen Einsteck-Gewindebereich (13) und einen gewindelosen Einsteckbereich aufweist, wobei dieser letztere sich auf der Seite des freien Endes des Einsteckelements (1) befindet,
- wobei das Aufnahmeelement (200) einen Aufnahme-Gewindebereich (223) und einen gewindelosen Aufnahmebereich aufweist, wobei dieser letztere sich auf der dem freien Ende des Aufnahmeelements (200) entgegengesetzten Seite befindet,
- wobei der Einsteck-Gewindebereich (13) des Einsteckelements in den Aufnahme-Gewindebereich (223) des Aufnahmeelements eingeschraubt wird, und der gewindelose Bereich des Einsteckelements (1) mit demjenigen des Aufhahmeelements (200) zusammenwirkt,
- wobei der gewindelose Einsteckbereich des Einsteckelements (1) in Richtung zum freien Ende des Einsteckelements eine ringförmige Querauflagefläche (15) aufweist, die über einen Bruchteil der Stärke des Rohrs ausgebildet ist, sich durch die äußere Umfangsfläche einer Nase mit verringertem Außendurchmesser verlängert und in einer radialen Ringfläche (17), Innenende-Ringfläche des ersten Rohrs genannt, endet, die sich an die innere Umfangsfläche des ersten Rohrs (10) anschließt,
- wobei der gewindelose Aufnahmebereich des Aufnahmeelements (200) in Gegenrichtung zum freien Ende des Aufnahmeelements eine ringförmige Querauflagefläche (225) aufweist, die eine zur Auflagefläche (15) des Einsteckelements (1) komplementäre Schulter bildet, sich durch die innere Umfangsfläche einer sogenannten Verstärkungszone (226) und dann durch eine innere Sitzumfangsfläche (221) für einen Dichtring verlängert, und in einer radialen Ringfläche (217), Innenende-Ringfläche des zweiten Rohrs genannt, endet, die an die innere Umfangsfläche des zweiten Rohrs (210) anschließt,
- wobei die Auflagefläche (15) des Einsteckelements (1) in Anschlag gegen die Apflagefläche. (225) des Aufnahmeelements (200) angeordnet ist,
- wobei die Innenende-Ringflächen (17, 217) der beiden Rohre (10, 210) einander gegenüber und mit Abstand zueinander angeordnet sind,
- wobei ein Dichtring (40) aus Kunststoffmaterial direkt oder indirekt zwischen die Innenende-Ringflächen (17, 217) der beiden Rohre (10, 210) eingesetzt ist und von diesen letzteren axial direkt oder indirekt komprimiert wird,
**dadurch gekennzeichnet, daß**
a) die Verbindung auf jedem der gewindelosen Bereiche des Einstekkelements bzw. des Aufnahmeelements eine metallische ringförmige Dichtfläche aufweist, die sich zwischen dem Gewindebereich und der Auflagefläche befindet, wobei die metallische Einsteck-Dichtfläche (14) des Einsteckelements (1) auf der metallischen Aufnahme-Dichtfläche (224) des Aufnahmeelements (200) mit einer positiven diametralen Interferenz aufliegt,
b) ein Spiel zwischen der äußeren Umfangsfläche der Nase (16) des Einsteckelements (1) und der Umfangsfläche der gegenüberliegenden Verstärkungszone (226) auf dem Aufnahmeelement (200) aufrechterhalten wird.

2. Muffen-Gewindeverbindung zwischen zwei Metallrohren (10, 10') von der Art mit einem Einsteckelement (1, 1'), das außen am Ende jedes der beiden Rohre (10, 10') ausgebildet ist, und einem Aufnahmeelement (2, 2'), das innen an jedem Ende einer Muffe (20) ausgebildet ist, wobei die Aufnahmeelemente (2, 2') einander mit dem Rücken gegenüberliegend auf der Muffe (20) ausgebildet sind,
- wobei jedes Einsteckelement (1, 1') einen Einsteck-Gewindebereich (13, 13') und einen gewindelosen Einsteckbereich aufweist, wobei dieser letztere sich auf der Seite des freien Endes jedes betrachteten Einsteckelements befindet,
- wobei jedes Aufnahmeelement (2, 2') einen Aufnahme-Gewindebereich (23, 23') und einen gewindelosen Aufnahmebereich auf der dem freien Ende des betrachteten Aufnahmeelements entgegengesetzten Seite aufweist,
- wobei der Einsteck-Gewindebereich (13, 13') jedes Einsteckelements (1, 1') in den Aufnahme-Gewindebereich (23, 23') des entsprechenden Aufnahmeelements (2, 2') eingeschraubt wird, und der gewindelose Bereich jedes Einsteckelements mit demjenigen des entsprechenden Aufnahmeelements zusammenwirkt,
- wobei der gewindelose Einsteckbereich jedes Einsteckelements (1, 1') in Richtung zum freien Ende des Einsteckelements eine ringförmige Querauflagefläche (15, 15') aufweist, die über einen Bruchteil der Stärke des Rohrs ausgebildet ist, sich durch die äußere Umfangsfläche einer Nase mit verringertem Außendurchmesser verlängert und in einer radialen Ringfläche (17, 17'), Innenende-Ringfläche genannt, endet, die sich an die innere Umfangsfläche des betrachteten Rohrs (10, 10') anschließt,
- wobei die Innenende-Ringflächen (17, 17') einander gegenüber und mit Abstand zueinander angeordnet sind,
- wobei der gewindelose Aufnahmebereich jedes Aufnahmeelements (2, 2') der Muffe (20) in Gegenrichtung zum freien Ende des Aufnahmeelements eine ringförmige Querauflagefläche (25, 25') aufweist, die eine zur Auflagefläche (15, 15') des entsprechenden Einsteckelements (1, 1') komplementäre Schulter bildet, sich durch die innere Umfangsfläche einer sogenannten Verstärkungszone (26, 26') und dann durch eine Sitzfläche (22, 21) für einen Dichtring verlängert, die mit der Sitzfläche (22', 21') des anderen Aufnahmeelements der Muffe (20) zusammenhängt,
- wobei die Auflagefläche (15, 15') jedes Einsteckelements (1, 1') in Anschlag gegen die Auflagefläche (25, 25') des entsprechenden Aufnahmeelements angeordnet ist,
- wobei ein Dichtring (40) aus Kunststoffmaterial direkt oder indirekt zwischen die Innenende-Ringflächen (17, 17') der beiden Rohre (10, 10') eingesetzt ist und von diesen letzteren direkt oder indirekt axial komprimiert wird,
**dadurch gekennzeichnet, daß**
a) die Verbindung auf jedem der gewindelosen Bereiche jedes Einsteckelements (1, 1') bzw. jedes Aufnahmeelements (2, 2') eine metallische ringförmige Dichtfläche aufweist, die sich zwischen dem Gewindebereich und der Auflagefläche befindet, wobei die metallische Einsteck-Dichtfläche (14, 14') jedes Einsteckelements (1, 1') auf der metallischen Aufnahme-Dichtfläche (24, 24') des entsprechenden Aufnahmeelements (2, 2') mit einer positiven diametralen Interferenz aufliegt,
b) ein Spiel zwischen der äußeren Umfangsfläche der Nase (16, 16') jedes Einsteckelements (1, 1') und der gegenüberliegenden Verstärkungs-Umfangsfläche (26, 26') auf dem entsprechenden Aufnahmeelement (2, 2') aufrechterhalten wird.

3. Gewindeverbindung nach Anspruch 1 oder 2, **dadurch gekennzeichnet, daß** die Innenende-Ringflächen (17, 17', 217) der Rohre im wesentlichen gleiche Außen- und Innendurchmesser aufweisen.

4. Gewindeverbindung nach einem der Ansprüche 1 bis 3, **dadurch gekennzeichnet, daß** die Auflagefläche (15) des Einsteckelements eine konische, konkave, weit offene Fläche ist, während die Auflagefläche (25, 225) des Aufnahmeelements (2, 200) konisch, aber konvex mit einem Winkel ist, der demjenigen der Auflagefläche (15) des Einsteckelements (1) entspricht.

5. Gewindeverbindung nach einem der Ansprüche 1 bis 4, **dadurch gekennzeichnet, daß** der Durchmesser der inneren Umfangsfläche der Verstärkungszone (26, 226) auf dem Aufnahmeelement (2, 200) sich bei Entfernung von der Auflagefläche (25, 225) verringert.

6. Gewindeverbindung nach Anspruch 5, **dadurch gekennzeichnet, daß** der Winkel zwischen der Auflagefläche (25, 225) des Aufhahmeelements (2, 200) und der Verstärkungszone (26, 226) dieses Elements ein rechter oder ein stumpfer Winkel ist.

7. Gewindeverbindung nach einem der Ansprüche 1 bis 6, **dadurch gekennzeichnet, daß** die metallischen Einsteck- (14) und Aufnahme-Dichtflächen (24, 224) konische Flächen mit einem im wesentlichen gleichen Spitzen-Halbwinkel sind, wobei der Durchmesser dieser Flächen sich bei Annäherung an das freie Ende des Einsteckelements (1) verringert.

8. Gewindeverbindung nach einem der Ansprüche 1 bis 7, **dadurch gekennzeichnet, daß** die äußere Umfangsfläche (43) des Dichtrings (40) gegen mindestens einen geraden Abschnitt der Umfangsfläche des Sitzes (21, 221) anliegt, der auf dem Aufnahmeelement (2, 200) ausgebildet ist.

9. Gewindeverbindung nach einem der Ansprüche 1 bis 8, **dadurch gekennzeichnet, daß** der Dichtring (40) Mittel zur mechanischen Blokkierung (44, 44') aufweist, die seine radiale Verschiebung zur Achse hin verhindern, Verschiebung die ihn dazu bringen könnte, seinen Sitz (21, 221) zu verlassen.

10. Gewindeverbindung nach einem der Ansprüche 1 bis 9, **dadurch gekennzeichnet, daß** die Endringflächen der Rohre der Verbindung, die mit dem Dichtring (40) in Kontakt stehen, leicht konische, konvexe Flächen sind, die den Dichtring (40) einkeilen und ihn daran hindern, sich radial zur Achse zu verschieben.

11. Gewindeverbindung nach einem der Ansprüche 1 bis 10, **dadurch gekennzeichnet, daß** mindestens eines der Rohre der Verbindung auf seiner inneren Umfangsfläche und auf seiner Innenende-Ringfläche (17, 17', 217) mit einer Verkleidung versehen wird, wobei auf die Gewährleistung der Kontinuität der Verkleidung zwischen diesen beiden Flächen geachtet wird.

12. Gewindeverbindung nach Anspruch 11, **dadurch gekennzeichnet, daß** die Verkleidung, die für die innere Umfangsfläche des Rohrs und die Innenende-Ringfläche verwendet wird, eine Schicht (11, 11') einer aufgespritzten oder aufgetragenen Kunststoffverkleidung ist.

13. Gewindeverbindung nach Anspruch 11, **dadurch gekennzeichnet, daß** die Verkleidung der inneren Umfangsfläche des Rohrs oder der zu verbindenden Rohre aus einem Innenfutter-Rohr (51) besteht, das mit dem entsprechenden Rohr (10) der Verbindung fest verbunden ist, dessen End-Querfläche und die Innenende-Ringfläche (17) des entsprechenden Rohrs (10) der Verbindung senkrecht auf eine selbe Linie liegen, daß die Kontinuität der Verkleidung auf dieser Innenende-Ringfläche (17) mit Hilfe eines Ringflansches (60, 70) gewährleistet wird, dessen eine Seite (61, 71) mit der Innenende-Ringfläche (17) des Rohrs (10) und mit der Endfläche des Innenfutter-Rohrs (51) fest verbunden ist, und dessen entgegengesetzte Seite (62, 72) gegen den Dichtring (40) anliegt, wobei die Nase des Einsteckelements eine Verbundnase ist, die aus einem metallischen Teil (16, 16') und dem Ringflansch (60, 70) besteht.

14. Gewindeverbindung nach Anspruch 13, **dadurch gekennzeichnet, daß** die Verbundnase auf dem Einsteckelement oder den Einsteckelementen ausschließlich aus dem Ringflansch (60, 70) besteht, wobei der metallische Teil (16, 16') der Verbundnase eine Länge Null hat.

15. Gewindeverbindung nach Anspruch 13 oder 14, **dadurch gekennzeichnet, daß** das Innenfutter-Rohr (51) am Rohr (10) der Verbindung durch eine relativ dicke Schicht (52) eines Verbindungsmaterials befestigt ist, das am Hauptrohr (10) und am Innenfutter-Rohr (51) haftet.

16. Gewindeverbindung nach einem der Ansprüche 13 bis 15, **dadurch gekennzeichnet, daß** die Seite (71) des Flansches (70), die zur Innenende-Ringfläche (17) hin ausgerichtet ist, ein reliefartig vorstehendes Verankerungsmittel (73) aufweist, das mit einem Mittel komplementärer Form in der Endfläche der Verbindungsschicht (52) zusammenwirkt.

17. Gewindeverbindung nach einem der Ansprüche 13 bis 15, **dadurch gekennzeichnet, daß** der Flansch (60) auf der Seite seines Innendurchmessers im rechten Winkel durch eine Manschette (65) verlängert wird, die über ihre äußere Umfangsfläche fest mit der inneren Umfangsfläche des Innenfutter-Rohrs (51) verbunden ist.

18. Gewindeverbindung nach einem der Ansprüche 13 bis 17, **dadurch gekennzeichnet, daß** die Flansche (60, 60', 70, 70') aus der gleichen Art Material hergestellt sind wie die Innenfutter-Rohre (51, 51').

19. Gewindeverbindung nach einem der Ansprüche 13 bis 18, **dadurch gekennzeichnet, daß** die Anlagefläche (62, 72) des Rings auf dem Flansch (60, 70) eine sehr geringfügig konische, konvexe Fläche ist.

20. Muffen-Gewindeverbindung nach Anspruch 2 alleine oder zusammen mit einem der Ansprüche 3 bis 19, **dadurch gekennzeichnet, daß** der Dichtring ein äquivalenter Dichtkörper ist, der aus einem verformbaren Ring (31, 32) besteht, der koaxial zu beiden Seiten eines zentralen Rings (33) aus hartem Kunststoffmaterial angeordnet ist, wobei jeder der beiden verformbaren Ringe (31, 32) axial einerseits auf einer Endseite (35, 35') des zentralen Rings (33) und andererseits auf der radialen Innenende-Ringfläche (17, 17') der Rohre (10, 10') aufliegt.

21. Muffen-Gewindeverbindung nach Anspruch 20, **dadurch gekennzeichnet, daß** die verformbaren Ringe (31, 32) auf die Endseiten (35, 35') des zentralen Rings (33) geklebt sind.

22. Gewindeverbindung nach Anspruch 20 oder 21, **dadurch gekennzeichnet, daß** die Endseiten (35, 35') des zentralen Rings (33) kegelstumpfförmige konvexe Flächen mit einem Halbwinkel an der Spitze von mindestens gleich 75° sind.
